# EUROPEAN PATENT SPECIFICATION

(11) **EP 3 798 067 B1**
(45) Date of publication and mention of the grant of the patent: **27.04.2022**
(21) Application number: 20194011.1
(22) Date of filing: 02.09.2020
(51) Int. Cl.: B60S 1/34, B60S 1/52

(54) **WIPER ARM**
WISCHERARM
BRAS D'ESSUIE-GLACE

(30) Priority: 26.09.2019 JP 2019174959
(43) Date of publication of application: 31.03.2021
(73) Proprietor: Mitsuba Corporation, Kiryu-shi, Gunma 376-8555 (JP)
(72) Inventor: NAKAJIMA, Nobutaka, Gunma, 3768555 (JP); MACHIDA, Ken, Gunma, 3768555 (JP)
(74) Representative: Becker, Eberhard

(56) References cited:
- EP-A1- 3 138 743
- WO-A1-2013/080997
- US-A1- 2014 345 076

## Description

### BACKGROUND

### Technical Field

The disclosure relates to a wiper arm disposed in a wiper device for wiping a surface to be wiped.

### Description of Related Art

A wiper device is mounted on a vehicle such as an automobile. The wiper device includes a wiper motor that is a driving source, a wiper arm that is swung when driven by the wiper motor, and a wiper blade that is attached to the wiper arm. Further, a wiper blade having a blade rubber and a rubber holder is known as an example of the wiper blade.

For an example of the wiper arm as described above, known is a wiper arm having a rubber holder in which a water passage for a cleaning liquid to be sprayed onto a surface to be wiped is formed, and such a wiper arm is disclosed in Patent Document 1.

### Related Art

### Patent Document

[Patent Document 1] International Publication No. WO 2013/080997
[Patent Document 2] European Patent Application EP 3 138 743 A1

### SUMMARY

### Technical Problem

In the wiper arm described in Patent Document 1, since the water passage is formed in the rubber holder, the shape of the rubber holder becomes complicated and it becomes difficult to assemble the wiper blade provided with the rubber holder. Therefore, it is conceivable to adopt a structure in which the wiper arm is provided with a cylindrical tube having an ejection hole for ejecting the cleaning liquid as a member separate from the rubber holder.

However, since the tube has a cylindrical shape, when the tube is fixed to the wiper arm, the tube may rotate in the circumferential direction, which may make positioning of the ejection hole difficult. Patent Document 2 discloses the preamble of claim 1.

The disclosure provides a wiper arm in which the tube can be easily fixed while the tube is prevented from rotating in the circumferential direction.

### Solution to the Problem

The invention is set out in the appended set of claims.

According to an aspect of the disclosure, a wiper arm includes an arm head; a shank including a pair of side walls connected to a tip end of the arm head and facing each other and a top wall connected to an upper end part of each of the side walls; a tube for supplying a washer liquid; and a bottom cover joined to a lower end part of each of the side walls and facing the top wall. The bottom cover includes a body part in a plate shape and a wall part provided on the body part and protruding toward the top wall. The tube is disposed between the body part and the wall part and the shank, and includes a first flat surface which is in contact with the body part, a second flat surface which is in contact with the wall part, and a shank side surface which is connected to the first flat surface and the second flat surface, and an ejection hole for ejecting the washer liquid is opened on the shank side surface of the tube.

According to another aspect of the disclosure, the shank side surface is an outer surface of a part including an arc-shaped part connected to a first flat part having the first flat surface and a third flat part having a third flat surface connected to a second flat part having the second flat surface, and the ejection hole is formed in the arc-shaped part.

According to another aspect of the disclosure, the tube includes a corner part located at a joint part between the second flat part and the third flat part and a flow passage of the washer liquid formed by an inner peripheral surface of the tube, and a cross section of the flow passage in a direction intersecting a longitudinal direction of the tube is circular. The ejection hole is formed at a position symmetrical to the corner part with respect to a center of the flow passage, and a thickness of the corner part is greater than a thickness of the arc-shaped part in a diameter direction of the flow passage.

According to another aspect of the disclosure, the bottom cover further includes a holding part which is disposed on an outer side of the wall part and faces the wall part, and which the arc-shaped part of the tube contacts, and the tube is clamped by the wall part and the holding part.

According to another aspect of the disclosure, the wiper arm further includes a hole part formed in the body part of the bottom cover, wherein the hole part is formed at a position facing the ejection hole, and a through hole communicating with the hole part is formed in the holding part.

According to another aspect of the disclosure, an angle formed by the first flat surface and the second flat surface in the tube is 90 degrees.

### Effects

According to the disclosure, in the wiper arm, the tube has at least two flat surfaces in its outer peripheral shape, whereby the tube is prevented from rotating in the circumferential direction at the time of being assembled, and the tube is easily fixed.

### BRIEF DESCRIPTION OF THE DRAWINGS

FIG. 1 is a perspective view showing an appearance structure of a wiper arm of the disclosure.
FIG. 2 is a perspective view showing the structure of the wiper arm shown in FIG. 1 on the bottom cover side.
FIG. 3 is a cross-sectional view showing the structure of the shank taken along the line A-A of FIG. 2.
FIG. 4 is a partial perspective view showing the structure cut along the line A-A in FIG. 2.
FIG. 5 is a cross-sectional view showing the structure of the tube on the closed side in the wiper arm of the embodiment.
FIG. 6 is a cross-sectional view showing the structure of the tube on the open side in the wiper arm of the embodiment.
FIG. 7 is a cross-sectional view showing a positional deviation state of a hole part of a tube in a wiper arm of a comparative example.
FIG. 8 is a partial rear view showing the structure of the wiper arm in the incorrectly assembled state as viewed through the inside of the hole part.
FIG. 9 is a partial rear view showing the structure of the wiper arm in the correctly assembled state as viewed through the inside of the hole part.
FIG. 10 are longitudinal sectional views showing a processing method of the hole part of the tube in the wiper arm of the comparative example, wherein (a) shows a laser irradiation state, and (b) shows a structure after the hole part is formed.
FIG. 11 are cross-sectional views showing a processing method of the hole part of the tube in the wiper arm of the comparative example shown in FIG. 10, wherein (a) shows the laser irradiation state, and (b) shows the structure after the hole part is formed.
FIG. 12 are cross-sectional views showing a processing method of the hole part of the tube on the closed side in the wiper arm of the embodiment, wherein (a) shows a laser irradiation state, and (b) shows a structure after the hole part is formed.
FIG. 13 are cross-sectional views showing a processing method of the hole part of the tube on the open side in the wiper arm of the embodiment, wherein (a) shows a laser irradiation state, and (b) shows a structure after the hole part is formed.

### DESCRIPTION OF THE EMBODIMENTS

Hereinafter, each embodiment of the disclosure will be described in detail with reference to the drawings.

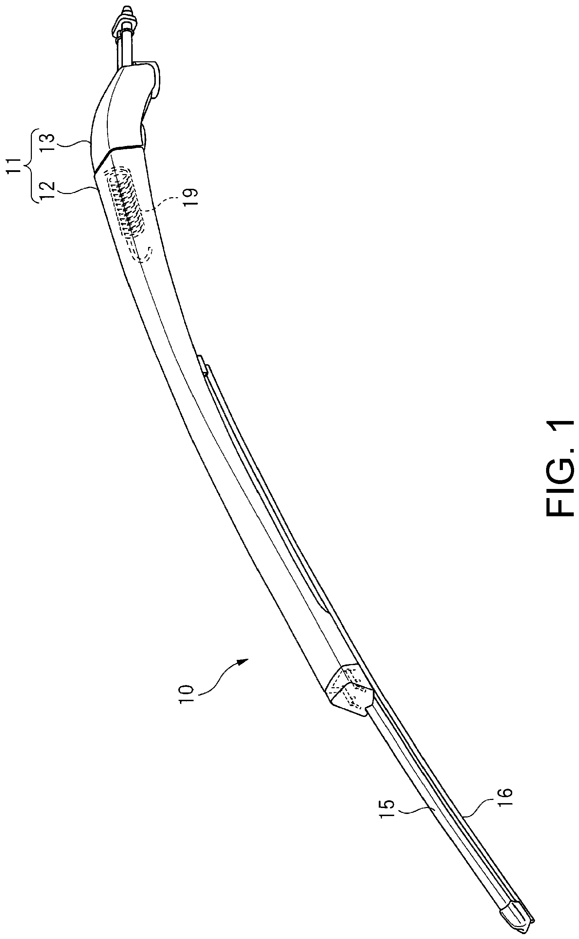

A wiper device 10 shown in FIG. 1 is, for example, a device for wiping a surface to be wiped such as a rear glass provided in a vehicle such as an automobile. The wiper device 10 includes a wiper arm 11 having a long and narrow arm shank (shank) 12, a wiper blade 15 having a blade rubber 16 for wiping the surface to be wiped, and a connecting member (not shown) for connecting the wiper arm 11 and the wiper blade 15.

The wiper arm 11 includes the arm shank 12 and an arm head 13 that rotatably supports the arm shank 12.

In addition, the wiper blade 15 is rotatably connected to the vicinity of a center part of the arm shank 12 in the longitudinal direction via the connecting member. Further, an output shaft (not shown) of a wiper motor forming the wiper device 10 is fixed to the base end side of the wiper arm 11.

Then, by turning on a wiper switch provided in a passenger compartment or the like, the output shaft of the wiper motor rotates in forward and reverse directions, and the wiper arm 11 swings. As a result, the blade rubber 16 attached to the wiper blade 15 performs a back-and-forth wiping operation within a predetermined wiping range of the surface to be wiped such as the rear glass, whereby rainwater and the like adhering to the surface to be wiped such as the rear glass is wiped.

The wiper arm 11 is, for example, formed in a rod shape by injection-molding a resin material such as plastic, and the thickness of the wiper arm 11 on the tip end side is formed to be smaller than the thickness on the base end side. More specifically, the wiper arm 11 is formed in a tapered shape that gradually becomes thinner from the base end side toward the tip end side. This improves the design property of the wiper arm 11. However, the appearance shape of the wiper arm 11 is not limited to the above-described shape.

Further, a pressing force acts on the arm shank 12 of the wiper arm 11 in a direction of tilting the arm shank 12 toward the surface to be wiped such as the rear glass. Therefore, during the back-and-forth wiping operation of the wiper blade 15, the wiper blade 15 is unlikely to fall out. Further, the pressing force is generated by a spring force of a spring 19 for pulling provided on the base end side of the arm shank 12.

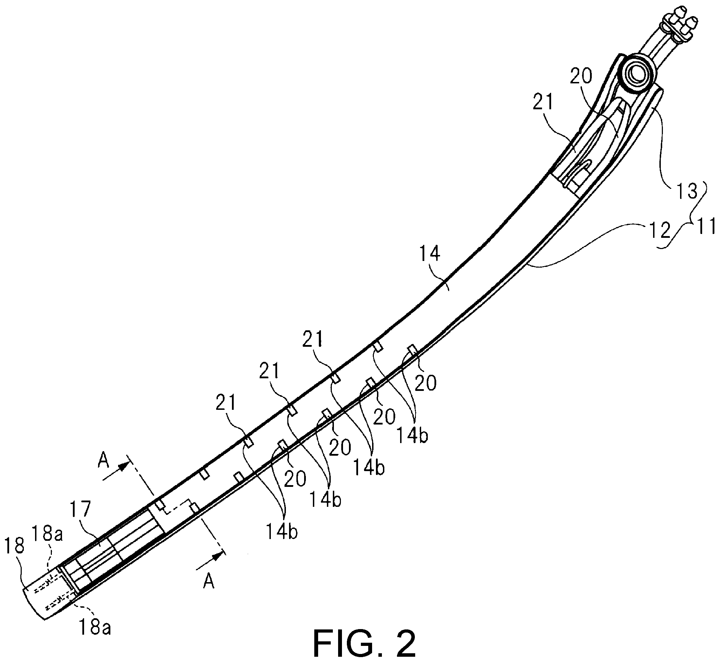

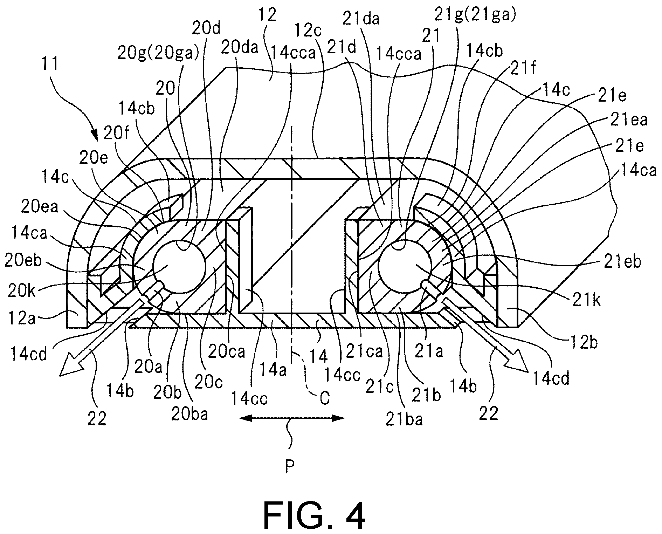

Here, in the wiper arm 11 of the embodiment, the arm shank 12 is connected to the tip end of the arm head 13. Then, as shown in FIG. 2, two tubes 20 and 21 for supplying a washer liquid (also referred to as a cleaning liquid) 22 (see FIG. 4) are disposed inside the arm shank 12. That is, in the embodiment, a case where the two tubes 20 and 21 for water supply are disposed inside the arm shank 12 is described as an example.

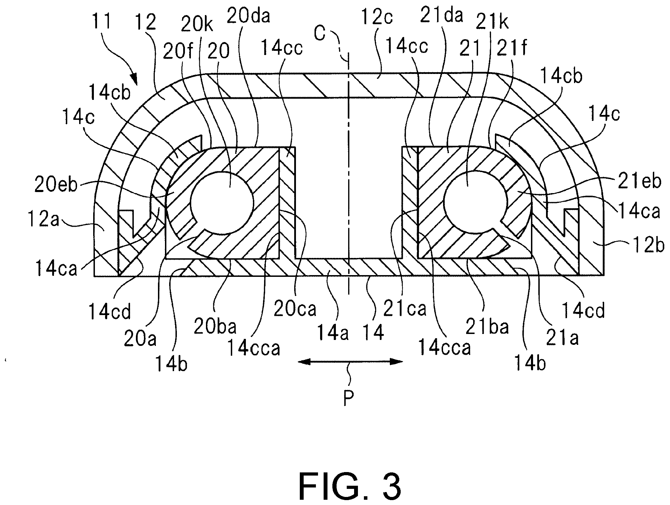

In addition, as shown in FIG. 3, the arm shank 12 includes a pair of side walls 12a and 12b facing each other, and a top wall 12c connected to the upper end part of each of the pair of side walls 12a and 12b. The top wall 12c is, for example, integrally formed with each of the side walls 12a and 12b. In other words, the arm shank 12 is a long and narrow plate-shaped member whose cross-sectional shape is a semi-cylindrical shape formed by the pair of side walls 12a and 12b facing each other and the top wall 12c.

The arm shank 12 further includes a bottom cover 14 which is joined to the lower end part of each of the pair of side walls 12a and 12b and which faces the top wall 12c. That is, the bottom cover 14 is disposed at the bottom of the plate-shaped semi-cylindrical arm shank 12, and the region surrounded by the arm shank 12 and the bottom cover 14 is a hollow part. Then, the two tubes 20 and 21 are disposed side by side in the hollow part surrounded by the arm shank 12 and the bottom cover 14. Since the bottom cover 14 is disposed at the bottom of the arm shank 12, the inside of the arm shank 12 is invisible even from the bottom surface side opposite to the top wall 12c. That is, since the bottom cover 14 is disposed at the bottom of the arm shank 12, the inside of the arm shank 12 may be hidden.

Further, as shown in FIG. 2, the bottom cover 14 is also formed to be long and narrow along the extending direction of the arm shank 12.

Further, a tip nozzle 18 is connected to the tip end part of the arm shank 12. Two ejection holes 18a are formed in the tip nozzle 18, and the tube 20 is connected to one of the ejection holes 18a, and the tube 21 is connected to the other of the ejection holes 18a. Therefore, in the washer liquid 22 (see FIG. 4) supplied respectively to the tubes 20 and 21, the washer liquid 22 that has reached the tip nozzle 18 is ejected to the outside from the two ejection holes 18a, respectively.

In addition, the respective parts of the two tubes 20 and 21 on the tip end side are held by a tube holder 17 located in the vicinity of the tip end of the arm shank 12. Further, the respective parts of the two tubes 20 and 21 on the base end side extend from the end parts of the arm head 13 to the outside of the arm head.

Next, the detailed structure of the bottom cover 14 of the embodiment will be described.

As shown in FIGs. 3 and 4, the bottom cover 14 has a function of holding each of the two tubes 20 and 21. Specifically, the bottom cover 14 has a plate-shaped body part 14a and wall parts (third wall parts 14cc) provided on the body part 14a and protruding toward the top wall 12c. Further, the bottom cover 14 is provided with holding parts 14c which are disposed on the outer side of the third wall parts 14cc to face the third wall parts 14cc and which a part of each of the tubes 20 and 21 contacts, and each of the tubes 20 and 21 is clamped by the third wall parts 14cc and the holding parts 14c.

Further, hole parts 14b are formed in the body part 14a of the bottom cover 14 at positions facing ejection holes 20a and 21a of the tubes 20 and 21, respectively. Further, the holding part 14c of the bottom cover 14 includes a first wall part 14ca disposed above the hole part 14b and a second wall part 14cb connected to the upper end of the first wall part 14ca. The first wall part 14ca and the second wall part 14cb are integrally formed, for example. Further, the plate-shaped body part 14a and the holding part 14c including the first wall part 14ca and the second wall part 14cb of the bottom cover 14 are integrally formed.

Further, a plurality of the holding parts 14c of the bottom cover 14 are, as shown in FIG. 2, staggeringly (alternately) provided on the bottom cover 14 with respect to the respective extending directions of the two tubes 20 and 21 disposed side by side. The holding parts 14c are formed at positions of each of the plurality of hole parts 14b shown in FIG. 2. Further, in the case of this structure, the holding parts 14c and the hole parts 14b for the two tubes 20 and 21 are provided staggeringly (alternately) with respect to the respective extending directions of the two tubes 20 and 21. Therefore, the holding parts 14c and the hole parts 14b provided on left and right on the bottom cover 14 are not provided side by side.

Next, the shapes of the tubes 20 and 21 incorporated in the wiper arm 11 of the embodiment will be described. As shown in FIGs. 3 and 4, each of the tubes 20 and 21 has a semi-cylindrical shape in the cross section in the direction intersecting the longitudinal direction of each of the tubes 20 and 21. That is, outer peripheral surfaces 20f and 21f of the tubes 20 and 21 each include three flat surfaces and one arc-shaped surface.

Specifically, the tube 20 is disposed in a housing part between the body part 14a and the third wall part 14cc of the bottom cover 14 and the arm shank 12. Further, as shown in FIG. 4, the tube 20 includes a first flat part 20b having a first flat surface 20ba that contacts the body part 14a and a second flat part 20c having a second flat surface 20ca that contacts an outer side surface 14cca (surface on the tube disposition side) which is a surface of the third wall part 14cc on the disposition side of the tube 20 and which faces the outer side of the arm shank 12. Further, the tube 20 has a shank side connecting part 20e having a shank side surface 20ea connected to the first flat surface 20ba and the second flat surface 20ca. Further, the shank side connecting part 20e has an arc-shaped part 20eb connected to the first flat part 20b and a third flat part 20d which has a third flat surface 20da and which is connected to the second flat part 20c. That is, the shank side surface 20ea is an outer surface of a part including the arc-shaped part 20eb connected to the first flat part 20b and the third flat part 20d which is connected to the second flat part 20c and which has the third flat surface 20da. In addition, the ejection holes 20a for ejecting the washer liquid 22 are formed in the arc-shaped part 20eb of the shank side connecting part 20e so as to open on the shank side surface 20ea.

Similarly, the tube 21 is disposed in a housing part between the body part 14a and the third wall part 14cc of the bottom cover 14 and the arm shank 12. Further, the tube 21 includes a first flat part 21b having a first flat surface 21ba that contacts the body part 14a and a second flat part 21c having a second flat surface 21ca that contacts an outer side surface 14cca (surface on the tube disposition side) which is a surface of the third wall part 14cc on the disposition side of the tube 21 and which faces the outer side of the arm shank 12. Further, the tube 21 has a shank side connecting part 21e having a shank side surface 21ea connected to the first flat surface 21ba and the second flat surface 21ca. Further, the shank side connecting part 21e has an arc-shaped part 21eb connected to the first flat part 21b and a third flat part 21d which is connected to the second flat part 21c and which has a third flat surface 21da. That is, the shank side surface 21ea is an outer surface of a part including the arc-shaped part 21eb connected to the first flat part 21b and the third flat part 21d which has the third flat surface 21da and which is connected to the second flat part 21c. In addition, the ejection holes 21a for ejecting the washer liquid 22 are formed in the arc-shaped part 21eb of the shank side connecting part 21e so as to open on the shank side surface 21ea.

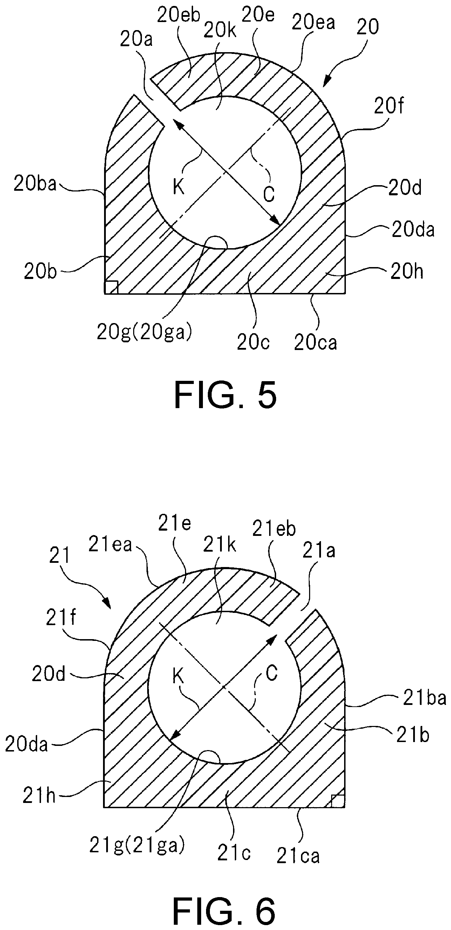

Further, as shown in FIG. 5, the angle formed by the first flat surface 20ba and the second flat surface 20ca in the tube 20 is 90 degrees (right angle). In addition, as shown in FIG. 6, the angle formed by the first flat surface 21ba and the second flat surface 21ca in the tube 21 is also 90 degrees (right angle). Further, the third wall part 14cc formed on the body part 14a of the bottom cover 14 shown in FIG. 3 is provided at a right angle to the plate-shaped body part 14a.

Therefore, in the wiper arm 11 of the embodiment, as shown in FIGs. 3 and 4, the first flat surface 20ba of the tube 20 is in surface contact with the plate-shaped body part 14a of the bottom cover 14, and the second flat surface 20ca is in surface contact with the outer side surface 14cca of the third wall part 14cc provided on the body part 14a of the bottom cover 14. Then, the tube 20 is clamped by the third wall parts 14cc and the holding parts 14c.

In addition, in the tube 21 as well, the first flat surface 21ba of the tube 21 is in surface contact with the plate-shaped body part 14a of the bottom cover 14, and the second flat surface 21ca is in surface contact with the outer side surface 14cca of the third wall part 14cc provided on the body part 14a of the bottom cover 14. Then, the tube 21 is clamped by the third wall parts 14cc and the holding parts 14c.

Further, as shown in FIG. 3, in the wiper arm 11 of the embodiment, the hole parts 14b in the plate-shaped body part 14a of the bottom cover 14 are formed at positions facing the ejection holes 20a of the tube 20, and further, through holes 14cd communicating with the hole parts 14b are formed in the holding parts 14c which are integrally formed with the body part 14a. Similarly, the hole parts 14b in the plate-shaped body part 14a of the bottom cover 14 are formed at positions facing the ejection holes 21a of the tube 21, and further, the through holes 14cd communicating with the hole parts 14b are formed in the holding parts 14c which are integrally formed with the body part 14a.

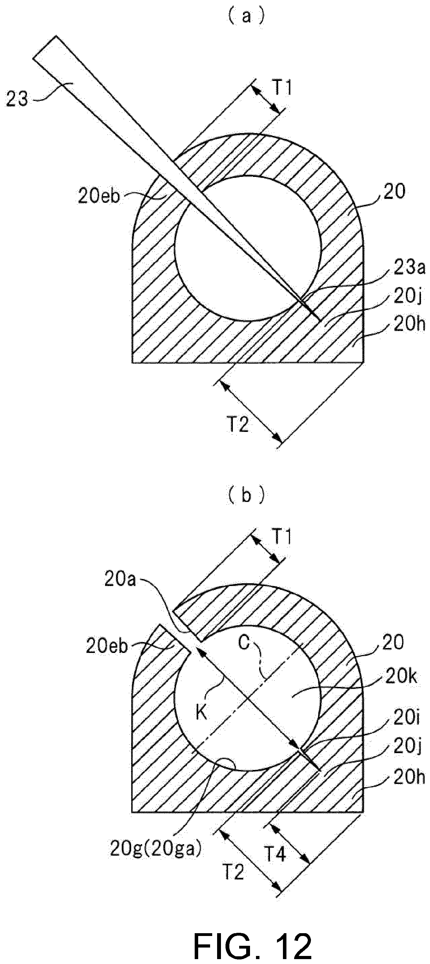

Further, as shown in FIG. 5, the tube 20 has an outer peripheral surface 20f formed by the first flat surface 20ba, the second flat surface 20ca, and the shank side surface 20ea; an inner peripheral surface 20g having a cross-sectional shape of a circle 20ga inside the outer peripheral surface 20f in a diameter direction K of the tube 20; and a corner part 20h located at a joint part between the second flat part 20c and the third flat part 20d. The circular inner peripheral surface 20g forms a flow passage 20k for the washer liquid 22 (see FIG. 4). Further, the ejection holes 20a of the tube 20 are, as shown in (b) of FIG. 12, formed at a position symmetrical to the corner part 20h with respect to a center C of the circle 20ga (flow passage 20k) formed by the inner peripheral surface 20g in the cross section that intersects the longitudinal direction of the tube 20, and a thickness T2 of the corner part 20h is greater than a thickness T1 of the arc-shaped part 20eb in the diameter direction K of the circle 20ga (flow passage 20k) (T1 <T2).

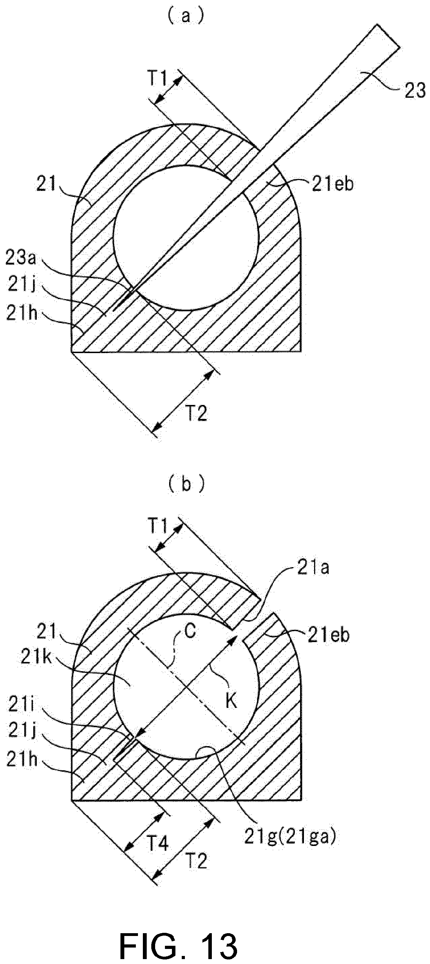

Similarly, as shown in FIG. 6, the tube 21 has an outer peripheral surface 21f formed by the first flat surface 21ba, the second flat surface 21ca, and the shank side surface 21ea; an inner peripheral surface 21g having a cross-sectional shape of a circle 21ga inside the outer peripheral surface 21f in a diameter direction K of the tube 21; and a corner part 21h located at a joint part between the second flat part 21c and the third flat part 21d. The circular inner peripheral surface 21g forms a flow passage 21k for the washer liquid 22 (see FIG. 4). Further, the ejection holes 21a of the tube 21 are, as shown in (b) of FIG. 13, formed at a position symmetrical to the corner part 21h with respect to a center C of the circle 21ga (flow passage 21k) formed by the inner peripheral surface 21g in the cross section that intersects the longitudinal direction of the tube 21, and a thickness T2 of the corner part 21h is greater than a thickness T1 of the arc-shaped part 21eb in the diameter direction K of the circle 21ga (flow passage 21k) (T1 <T2).

Further, as shown in FIG. 4, each of the tubes 20 and 21 is clamped by the third wall parts 14cc and the holding parts 14c including the first wall parts 14ca and the second wall parts 14cb provided on the bottom cover 14. At this time, the holding part 14c including the first wall part 14ca and the second wall part 14cb has an arc shape similar to the arc shapes of the arc-shaped parts 20eb and 21eb of the tubes 20 and 21, respectively. That is, the arc-shaped holding parts 14c have snap-fit structures with respect to the arc-shaped parts 20eb and 21eb of the tubes 20 and 21, respectively.

Further, the respective surfaces of the tubes 20 and 21 opposite to the arc-shaped parts 20eb and 21eb are second flat surfaces 20ca and 21ca, respectively, and the second flat surfaces 20ca and 21ca are in surface contact with the third wall parts 14cc. That is, unless the tubes 20 and 21 are disposed so that the respective arc-shaped parts 20eb and 21eb of the semi-cylindrical tubes 20 and 21 face the outer side, the tubes 20 and 21 are not fitted between the third wall parts 14cc and the arc-shaped holding parts 14c of the bottom cover 14. Further, the arc-shaped holding parts 14c form snap-fit structures with respect to the respective arc-shaped parts 20eb and 21eb of the tubes 20 and 21, whereby each of the tubes 21 and 21 may be clamped by the third wall parts 14cc and the holding parts 14c, and each of the tubes 20 and 21 may be fitted into the third wall parts 14cc and the holding parts 14c without mistaking the disposition direction.

As described above, in the wiper arm 11 of the embodiment, each of the tubes 20 and 21 has at least two flat surfaces (the first flat surfaces 20ba and 21ba and the second flat surfaces 20ca and 21ca) in their outer peripheral shapes, whereby each of the tubes 20 and 21 may be prevented from rotating (turning) in the circumferential direction when being assembled. Furthermore, by fitting and fixing each of the tubes 20 and 21 into the third wall parts 14cc and the holding parts 14c of the bottom cover 14, each of the tubes 20 and 21 may be easily fixed.

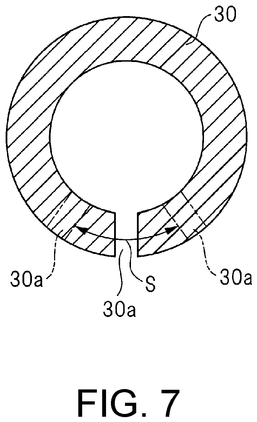

Here, a tube 30 of a comparative example shown in FIG. 7 studied by the inventors of the disclosure will be described. The tube 30 shown in FIG. 7 has a cylindrical shape in the cross-sectional shape.

For example, when two tubes 30 as shown in FIG. 7 are disposed on the wiper arm 11 as shown in FIG. 1, there are cases where the two tubes 30 to be assembled on the open side and the closed side have the same length and cross-sectional shape and differ only in the position of ejection holes 30a. However, since the length and the cross-sectional shape are the same, there is a concern of incorrect assembly in which the tubes 30 are incorrectly assembled for the open side and the closed side. In order to recognize the incorrect assembly, it is necessary to confirm by appearance inspection whether the positions of the ejection holes 30a are disposed at the designed positions, or to confirm whether the ejection hits the correct position during the hitting point inspection. At this time, it is difficult to detect a slight positional deviation by the small ejection holes 30a by the appearance inspection, and if the incorrect assembly is not detected until the hitting point inspection, there is a problem that all the processes of the hitting point inspection after the incorrect assembly are wasted.

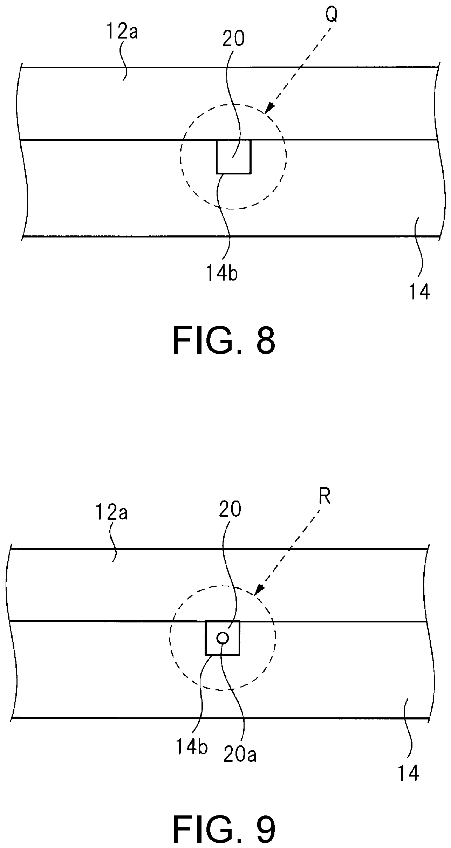

Therefore, in the wiper arm 11 of the embodiment, when the tube 20 is incorrectly assembled due to the incorrect assembly for the open side and the closed side, as shown in the Q part of FIG. 8, the ejection holes 20a (see FIG. 9) of the tube 20 cannot be confirmed from the hole parts 14b of the bottom cover 14 in the appearance inspection, and the incorrect assembly may be recognized (detected) by the appearance inspection. When the tube 20 is correctly assembled for the open side and the closed side, as shown in the R part of FIG. 9, since the ejection holes 20a of the tube 20 can be confirmed from the hole parts 14b of the bottom cover 14 in the appearance inspection, it may be recognized that there is no incorrect assembly (the same applies to the tube 21).

Further, in the cylindrical tube 30 of the comparative example shown in FIG. 7, there is a concern that the tube 30 may be rotated in the circumferential direction and be assembled. However, in the wiper arm 11 of the embodiment, the first flat surface 20ba of the tube 20 is in surface contact (contact) with the body part 14a of the bottom cover 14, and the second flat surface 20ca of the tube 20 located on the side opposite to the arc-shaped part 20eb is in surface contact (contact) with the outer side surface 14cca of the third wall part 14cc of the bottom cover 14. Further, the arc-shaped part 20eb of the tube 20 is held by the holding parts 14c of the bottom cover 14. That is, the tube 20 is clamped by the third wall parts 14cc and the holding parts 14c. As a result, the tube 20 may be positioned without rotating in the circumferential direction with respect to the bottom cover 14, and rattling of the tube 20 in a width direction P of the wiper arm 11 may be prevented. Therefore, when the tube 20 is correctly assembled for the open side and the closed side, the ejection holes 20a of the tube 20 may be easily confirmed from the hole parts 14b of the bottom cover 14 by appearance inspection (the same applies to the tube 21).

Further, since the holding part 14c of the bottom cover 14 has a snap-fit structure, the holding force for the tube 20 by the third wall parts 14cc and the holding parts 14c is increased, and the rattling of the tube 20 in the width direction P of the wiper arm 11 may be prevented, and the positional deviation of the ejection holes 20a may be prevented (the same applies to the tube 21).

Further, as shown in the S part of FIG. 7, in the tube 30 of the comparative example, when the positions of the ejection holes 30a deviate due to the rotation of the tube 30 in the circumferential direction, there is a concern that the cleaning property may decrease. However, in the wiper arm 11 of the embodiment, each of the tubes 20 and 21 is positioned by the body part 14a, the third wall parts 14cc, and the holding parts 14c of the bottom cover 14, and rotation in the circumferential direction may also be prevented. Therefore, it is possible to prevent the decrease of the cleaning property.

Further, in the wiper arm 11 of the embodiment, since the first flat surfaces 20ba and 21ba and the second flat surfaces 20ca and 21ca of each of the tubes 20 and 21 are in contact with the bottom cover 14 as described above, each of the tubes 20 and 21 may be prevented from rotating in the circumferential direction. At this time, the ejection holes 20a and 21a of each of the tubes 20 and 21 are provided toward the outer side in the width direction P of the arm shank 12. As a result, the washer liquid 22 may be sprayed while being spread in the wiping direction of the wiper arm 11.

As a result, the cleaning property of the washer liquid 22 may be improved, and the cleaning range of the surface to be wiped may be expanded.

Further, in each of the tubes 20 and 21, the outer peripheral surfaces 20f and 21f have a semi-cylindrical shape, and the cross-sectional shapes of the inner peripheral surfaces 20g and 21g are circular; therefore, if the ejection holes 20a and 21a are provided at the locations where the outer peripheral surfaces 20f and 21f are flat, the ejection holes 20a and 21a will have different lengths depending on the locations where the ejection holes 20a and 21a are formed. However, as in the wiper arm 11 of the embodiment, by providing the ejection holes 20a and 21a in the arc-shaped parts 20eb and 21eb of the tubes 20 and 21, respectively, the length of each of the ejection holes 20a and 21a may be kept constant. Therefore, the discharge capacity (discharge amount, discharge pressure, etc.) of the washer liquid 22 may be kept constant. As a result, the cleaning property of the washer liquid 22 may be made uniform.

Further, since each of the tubes 20 and 21 is clamped by the third wall parts 14cc and the holding parts 14c of the bottom cover 14, the fixing force for each of the tubes 20 and 21 in the width direction P of the wiper arm 11 may be increased.

Further, since the hole parts 14b are formed in the body part 14a of the bottom cover 14 and the through holes 14cd that communicate with the hole parts 14b are formed in the holding parts 14c of the bottom cover 14, the tuning range of the ejection direction of the washer liquid 22 may be widened to directions obliquely downward and the like. As a result, the cleaning property of the wiper arm 11 may be improved.

Further, since the angle formed by the first flat surfaces 20ba and 21ba and the second flat surfaces 20ca and 21ca of the tubes 20 and 21, respectively, is 90 degrees (right angle), when the third wall parts 14cc of the bottom cover 14 in contact with each of the second flat surfaces 20ca and 21ca are provided in a protruding way on the body part 14a, the third wall parts 14cc may be easily formed on the bottom cover 14 simply by the upper and lower mold cutting.

Next, the hole processing of the tube of the embodiment will be described.

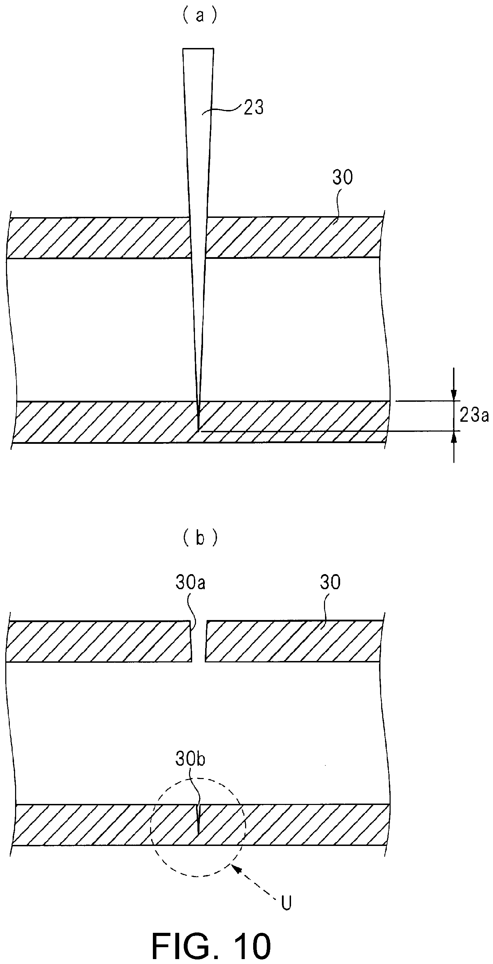

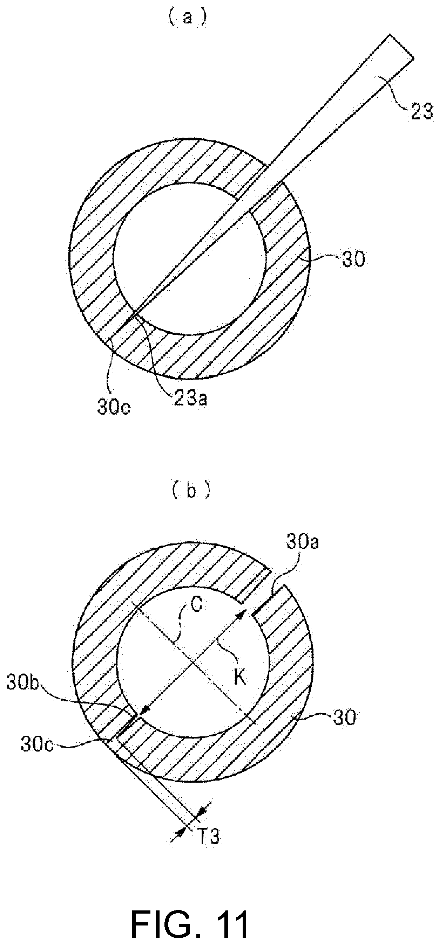

As shown in the comparative example of FIGs. 10 and 11, in the hole processing of the tube 30, a processing method of forming the ejection holes 30a by using a laser 23, a needle or the like can be considered. For example, as shown in (a) of FIG. 10, when the ejection hole 30a of (b) of FIG. 10 is processed by the laser 23, the laser 23 reaches the wall of the tube 30 on the opposite side and becomes a penetrating part 23a; as shown in (b) of FIG. 10, an excessive hole 30b (the U part) may be formed in the wall on the opposite side. This phenomenon is an inevitable side effect for processing with a desired hole diameter due to the influence of the focal length of the laser 23.

Then, in the cylindrical tube 30, as shown in (a) of FIG. 11, the thickness of the tube 30 is the same at any part in the circumferential direction; therefore, as shown in (b) of FIG. 11, if the excessive hole 30b is formed in the wall on the opposite side of the ejection hole 30a, a thickness T3 of a residual part 30c of the tube 30 becomes small, which may cause the tube 30 to be broken.

Therefore, the tube according to the embodiment has a semi-cylindrical shape in the appearance shape. That is, in each of the tubes 20 and 21, the corner parts 20h and 21h are disposed in the part on the opposite side of the location where the ejection holes 20a and 21a are provided, and as shown in FIG. 12 and FIG. 13, the thickness T2 of the corner parts 20h and 21h is sufficiently greater than the thickness T1 of the arc-shaped parts 20eb and 21eb where the ejection holes 20a and 21a are provided. In this way, it is possible to ensure that the thickness T2 is thick to the extent that the laser 23 does not penetrate even if the laser 23 reaches the wall on the opposite side (the corner parts 20h and 21h).

In addition, FIG. 12 shows the laser processing on the tube 20 on the closed side, and as shown in (a) of FIG. 12, even if the laser 23 reaches the wall on the opposite side, the thick corner part 20h is disposed. Therefore, as shown in (b) of FIG. 12, even if an excessive hole 20i is formed in the corner part 20h, a residual part 20j having a large thickness T4 may be formed.

Similarly, in the tube 21 on the open side shown in (a) of FIG. 13, even if the laser 23 reaches the wall on the opposite side, the thick corner part 21h is disposed. Therefore, as shown in (b) of FIG. 13, even if an excessive hole 21i is formed in the corner part 21h, a residual part 21j having a large thickness T4 may be formed.

That is, since each of the semi-cylindrical tubes 20 and 21 has two corner parts 20h and 21h, the same effect may be obtained for both of the ejection holes 20a and 21a on the closed side and the open side. That is, since the corner parts 20h and 21h are set to be thicker than the arc-shaped parts 20eb and 21eb (T1 <T2) in each of the tubes 20 and 21 on the closed side and the open side, respectively, it is possible to reduce the possibility that the laser 23 or the needle or the like penetrates the corner parts 20h and 21h. As a result, it is possible to prevent the tubes 20 and 21 from being broken on both the closed side and the open side.

The disclosure is not limited to the above embodiments, and various modifications may be made. For example, in the above embodiments, it is disclosed that the wiper arm is applied to the rear wiper device for wiping the surface to be wiped such as the rear glass of a vehicle such as an automobile, but the disclosure is not limited thereto, and the wiper arm may be applied to a wiper device mounted on the front side of a vehicle such as an automobile or to a wiper device mounted on a ship, an aircraft, a railway vehicle, or the like.

Further, in the above embodiments, the case where two tubes are provided inside the arm shank has been described, but the number of tubes provided inside the arm shank may be one or may be three or more.

Further, in the case where the holding parts for holding the tubes are provided on the bottom cover in two rows, the two rows of the holding parts may be disposed side by side instead of being alternately disposed. Moreover, the number of holding parts in one row may be at least one.

### Description of Reference Numerals

10: Wiper device
11: Wiper arm
12: Arm shank (shank)
12a: Side wall
12b: Side wall
12c: Top wall
13: Arm head
14: Bottom cover
14a: Body part
14b: Hole part
14c: Holding part
14ca: First wall part
14cb: Second wall part
14cc: Third wall part (wall part)
14cca: Outer side surface
14cd: Through hole
15: Wiper blade
16: Blade rubber
17: Tube holder
18: Tip nozzle
18a: Ejection hole
19: Spring
20: Tube
20a: Ejection hole
20b, 21b: First flat part
20ba, 21ba: First flat surface
20c, 21c: Second flat part
20ca, 21ca: Second flat surface
20d, 21d: Third flat part
20da, 21da: Third flat surface
20e, 21e: Shank side connecting part
20ea, 21ea: Shank side surface
20eb, 21eb: Arc-shaped part
20f, 21f: Outer peripheral surface
20g, 21g: Inner peripheral surface
20ga, 21ga: Circle
20h, 21h: Corner part
20i, 21i: Excessive hole
20j, 21j: Residual part
20k, 21k: Flow passage
21: Tube
21a: Ejection hole
22: Washer liquid
23: Laser
23a: Penetrating part
30: Tube
30a: Ejection hole
30b: Excessive hole
30c: Residual part

## Claims

1. A wiper arm (11), comprising:
an arm head (13);
a shank (12), comprising:
a pair of side walls (12a, 12b) connected to a tip end of the arm head (13) and facing each other; and
a top wall (12c) connected to an upper end part of each of the side walls (12a, 12b);
a tube (20, 21) for supplying a washer liquid (22); and
a bottom cover (14) joined to a lower end part of each of the side walls (12a, 12b) and facing the top wall (12c), the wiper arm being **characterised in that** the bottom cover (14) comprises a body part (14a) in a plate shape and a wall part (14cc) provided on the body part (14a) and protruding toward the top wall (12c),
the tube (20, 21) is disposed between the body part (14a) and the wall part (14cc) and the shank (12), and comprises a first flat surface (20ba, 21ba) which is in contact with the body part (14a), a second flat surface (20ca, 21ca) which is in contact with the wall part (14cc), and a shank side surface (20ea, 21ea) which is connected to the first flat surface (20ba, 21ba) and the second flat surface (20ca, 21ca), and
an ejection hole (20a, 21a) for ejecting the washer liquid (22) is opened on the shank side surface (20ea, 21ea) of the tube (20, 21).

2. The wiper arm according to claim 1, wherein the shank side surface (20ea, 21ea) is an outer surface of a part comprising:
an arc-shaped part (20eb, 21eb) connected to a first flat part (20b, 21b) having the first flat surface (20ba, 21ba); and
a third flat part (20d, 21d) having a third flat surface (20da, 21da) connected to a second flat part (20c, 21c) having the second flat surface (20ca, 21ca), and
the ejection hole (20a, 21a) is formed in the arc-shaped part (20eb, 21eb).

3. The wiper arm according to claim 2, wherein
the tube (20, 21) comprises:
a corner part (20h, 21h) located at a joint part between the second flat part (20b, 21b) and the third flat part (20d, 21d); and
a flow passage (20k, 21k) of the washer liquid (22) formed by an inner peripheral surface (20g, 21g) of the tube (20, 21),
a cross section of the flow passage (20k, 21k) in a direction intersecting a longitudinal direction of the tube (20, 21) is circular,
the ejection hole (20a, 21a) is formed at a position symmetrical to the corner part (20h, 21h) with respect to a center of the flow passage (20k, 21k), and
a thickness of the corner part (20h, 21h) is greater than a thickness of the arc-shaped part (20eb, 21eb) in a diameter direction of the flow passage (20k, 21k).

4. The wiper arm according to claim 2 or claim 3, wherein the bottom cover (14) further comprises a holding part (14c) which is disposed on an outer side of the wall part (14cc) and faces the wall part (14cc), and which the arc-shaped part (20eb, 21eb) of the tube (20, 21) contacts, and
the tube (20, 21) is clamped by the wall part (14cc) and the holding part (14c).

5. The wiper arm according to claim 4, further comprising a hole part (14b) formed in the body part (14a) of the bottom cover (14),
wherein the hole part (14b) is formed at a position facing the ejection hole (20a, 21a), and
a through hole (14cd) communicating with the hole part (14b) is formed in the holding part (14c).

6. The wiper arm according to any one of claims 1 to 5, wherein an angle formed by the first flat surface (20ba, 21ba) and the second flat surface (20ca, 21ca) in the tube (20, 21) is 90 degrees.

## Patentansprüche

1. Wischerarm (11), umfassend:
einen Armkopf (13);
einen Schaft (12), umfassend:
ein Paar von Seitenwänden (12a, 12b), die mit einem Spitzenende des Armkopfes (13) verbunden sind und einander gegenüberliegen; und
eine obere Wand (12c), die mit einem oberen Endteil jeder der Seitenwände (12a, 12b) verbunden ist;
ein Rohr (20, 21) zum Zuführen einer Waschflüssigkeit (22); und
eine untere Abdeckung (14), die mit einem unteren Endteil jeder der Seitenwände (12a, 12b) zusammengefügt ist und der oberen Wand (12c) gegenüberliegt,
wobei der Wischerarm **dadurch gekennzeichnet ist, dass** die untere Abdeckung (14) einen Körperteil (14a) in einer Plattenform und einen Wandteil (14cc) umfasst, der an dem Körperteil (14a) bereitgestellt ist und in Richtung der oberen Wand (12c) vorsteht,
das Rohr (20, 21) zwischen dem Körperteil (14a) und dem Wandteil (14cc) und dem Schaft (12) angeordnet ist und eine erste flache Fläche (20ba, 21ba), die in Kontakt mit dem Körperteil (14a) ist, eine zweite flache Fläche (20ca, 21ca), die in Kontakt mit dem Wandteil (14cc) ist, und eine schaftseitige Fläche (20ea, 21ea) umfasst, die mit der ersten flachen Fläche (20ba, 21ba) und der zweiten flachen Fläche (20ca, 21ca) verbunden ist, und
ein Ausstoßloch (20a, 21a) zum Ausstoßen der Waschflüssigkeit (22) an der schaftseitigen Fläche (20ea, 21ea) des Rohrs (20, 21) geöffnet ist.

2. Wischerarm gemäß Anspruch 1, wobei die schaftseitige Fläche (20ea, 21ea) eine Außenfläche eines Teils ist, umfassend:
einen bogenförmigen Teil (20eb, 21eb), der mit einem ersten flachen Teil (20b, 21b) mit der ersten flachen Fläche (20ba, 21ba) verbunden ist; und
einen dritten flachen Teil (20d, 21d) mit einer dritten flachen Fläche (20da, 21da), der mit einem zweiten flachen Teil (20c, 21c) mit der zweiten flachen Fläche (20ca, 21ca) verbunden ist, und
das Ausstoßloch (20a, 21a) in dem bogenförmigen Teil (20eb, 21eb) ausgebildet ist.

3. Wischerarm gemäß Anspruch 2, wobei
das Rohr (20, 21) umfasst:
einen Eckteil (20h, 21h), der sich an einem Verbindungsteil zwischen dem zweiten flachen Teil (20b, 21b) und dem dritten flachen Teil (20d, 21d) befindet; und
einen Strömungsdurchgang (20k, 21k) für die Waschflüssigkeit (22), der durch eine innere Umfangsfläche (20g, 21g) des Rohrs (20, 21) ausgebildet ist,
ein Querschnitt des Strömungsdurchgangs (20k, 21k) in einer Richtung, die eine Längsrichtung des Rohrs (20, 21) schneidet, kreisförmig ist,
das Ausstoßloch (20a, 21a) an einer Position symmetrisch zu dem Eckteil (20h, 21h) in Bezug auf eine Mitte des Strömungsdurchgangs (20k, 21k) ausgebildet ist, und
eine Dicke des Eckteils (20h, 21h) größer ist als eine Dicke des bogenförmigen Teils (20eb, 21eb) in einer Durchmesserrichtung des Strömungsdurchgangs (20k, 21k).

4. Wischerarm gemäß Anspruch 2 oder 3, wobei die untere Abdeckung (14) ferner einen Halteteil (14c) aufweist, der an einer Außenseite des Wandteils (14cc) angeordnet ist und dem Wandteil (14cc) gegenüberliegt ist, und den der bogenförmige Teil (20eb, 21eb) des Rohrs (20, 21) berührt, und
das Rohr (20, 21) durch den Wandteil (14cc) und den Halteteil (14c) geklemmt wird.

5. Wischerarm gemäß Anspruch 4, ferner umfassend einen Lochteil (14b), der in dem Körperteil (14a) der unteren Abdeckung (14) ausgebildet ist,
wobei der Lochteil (14b) an einer Position ausgebildet ist, die dem Ausstoßloch (20a, 21a) gegenüberliegt, und
ein Durchgangsloch (14cd), das mit dem Lochteil (14b) in Verbindung steht, in dem Halteteil (14c) ausgebildet ist.

6. Wischerarm gemäß irgendeinem der Ansprüche 1 bis 5, wobei ein durch die erste flache Fläche (20ba, 21ba) und die zweite flache Fläche (20ca, 21ca) gebildeter Winkel in dem Rohr (20, 21) 90 Grad beträgt.

## Revendications

1. Bras d'essuie-glace (11), comprenant :
une tête de bras (13);
une tige (12), comprenant :
une paire de parois latérales (12a, 12b) reliées à une extrémité de pointe de la tête de bras (13) et se faisant face; et
une paroi supérieure (12c) reliée à une partie d'extrémité supérieure de chacune des parois latérales (12a, 12b) ;
un tube (20, 21) pour fournir un liquide lave-glace (22); et
un couvercle inférieur (14) relié à une partie d'extrémité inférieure de chacune des parois latérales (12a, 12b) et faisant face à la paroi supérieure (12c),
le bras d'essuie-glace étant **caractérisé en ce que** le couvercle inférieur (14) comprend une partie de corps (14a) en forme de plaque et une partie de paroi (14cc) prévue sur la partie de corps (14a) et dépassant en saillie vers la paroi supérieure (12c),
le tube (20, 21) est disposé entre la partie de corps (14a) et la partie de paroi (14cc) et la tige (12), et comprend une première surface plane (20ba, 21ba) qui est en contact avec le corps (14a), une deuxième surface plane (20ca, 21ca) qui est en contact avec la partie de paroi (14cc), et une surface côté tige (20ea, 21ea) qui est reliée à la première surface plane (20ba, 21ba) et la deuxième surface plane (20ca, 21ca), et
un trou d'éjection (20a, 21a) pour éjecter le liquide lave-glace (22) est ouvert sur la surface latérale de tige (20ea, 21ea) du tube (20, 21).

2. Bras d'essuie-glace selon la revendication 1, dans lequel la surface côté tige (20ea, 21ea) est une surface extérieure d'une pièce comprenant :
une partie en forme d'arc (20eb, 21eb) reliée à une première partie plane (20b, 21b) ayant la première surface plane (20ba, 21ba) ; et
une troisième partie plane (20d, 21d) ayant une troisième surface plane (20da, 21da) reliée à une deuxième partie plane (20c, 21c) ayant la deuxième surface plane (20ca, 21ca), et
le trou d'éjection (20a, 21a) est formé dans la partie en forme d'arc (20eb, 21eb).

3. Bras d'essuie-glace selon la revendication 2, dans lequel le tube (20, 21) comprend :
une partie d'angle (20h, 21h) située au niveau d'une partie de jonction entre la deuxième partie plane (20b, 21b) et la troisième partie plane (20d, 21d) ; et
un passage d'écoulement (20k, 21k) du liquide lave-glace (22) formé par une surface périphérique intérieure (20g, 21g) du tube (20, 21),
une section transversale du passage d'écoulement (20k, 21k) dans une direction coupant une direction longitudinale du tube (20, 21) est circulaire,
le trou d'éjection (20a, 21a) est formé à une position symétrique à la partie d'angle (20h, 21h) par rapport à un centre du passage d'écoulement (20k, 21k), et
une épaisseur de la partie d'angle (20h, 21h) est supérieure à une épaisseur de la partie en forme d'arc (20eb, 21eb) dans une direction de diamètre du passage d'écoulement (20k, 21k).

4. Bras d'essuie-glace selon la revendication 2 ou la revendication 3, dans lequel le couvercle inférieur (14) comprend en outre une partie de maintien (14c) qui est disposée sur un côté extérieur de la partie de paroi (14cc) et fait face à la partie de paroi (14cc), et avec laquelle la partie en forme d'arc (20eb, 21eb) du tube (20, 21) est en contact, et
le tube (20, 21) est serré par la partie de paroi (14cc) et la partie de maintien (14c).

5. Bras d'essuie-glace selon la revendication 4, comprenant en outre une partie de trou (14b) formée dans la partie de corps (14a) du couvercle inférieur (14),
dans lequel la partie de trou (14b) est formée à une position faisant face au trou d'éjection (20a, 21a), et
un trou traversant (14cd) communiquant avec la partie de trou (14b) est formé dans la partie de maintien (14c) .

6. Bras d'essuie-glace selon une quelconque des revendications 1 à 5, dans lequel un angle formé par la première surface plane (20ba, 21ba) et la deuxième surface plane (20ca, 21ca) dans le tube (20, 21) est de 90 degrés.
